# EUROPÄISCHE PATENTSCHRIFT

(11) **EP 2 190 329 B1**
(45) Veröffentlichungstag und Bekanntmachung des Hinweises auf die Patenterteilung: **04.01.2012**
(21) Anmeldenummer: 08801666.2
(22) Anmeldetag: 21.08.2008
(51) Int. Cl.: A47J 31/44

(54) **GETRÄNKEBEREITER**
BEVERAGE-MAKING MACHINE
SYSTÈME DE PRÉPARATION DE BOISSONS

(30) Priorität: 24.08.2007 DE 102007040305
(43) Veröffentlichungstag der Anmeldung: 02.06.2010
(73) Patentinhaber: Miele & Cie. KG, 33332 Gütersloh (DE); Eugster/Frismag AG, 8580 Amriswil (CH)
(72) Erfinder: GIEZENDANNER, Stefan, CH-9054 Haslen (CH); JUNGCLAUS, Dirk, 59302 Oelde (DE); NATTKEMPER, Jörg, 59065 Hamm (DE); WENDRICH, Franziska, 48336 Sassenberg (DE)
(86) Internationale Anmeldenummer: PCT/EP2008/006892
(87) Internationale Veröffentlichungsnummer: WO 2009/027053

(56) Entgegenhaltungen:
- EP-A- 1 731 065
- WO-A-01/24671
- DE-A1-102005 048 164
- US-A- 5 123 335

## Beschreibung

Die Erfindung betrifft einen Getränkebereiter zur Zubereitung von Getränken, zum Beispiel einen Kaffeeautomaten mit einem Gerät und mit einem Behälter, wobei das Gerät ein Gehäuse mit einer frontseitig angeordneten Tür aufweist und wobei in der Tür ein Ausgabebereich zum Ausgeben der Getränke vorgesehen ist.

Ein derartiger Getränkebereiter ist aus der DE 10 2005 048 164 A1 bekannt. Aus der EP 1 731 065 A1 ist ein Getränkebereiter mit einem im Gehäuseinneren angeordneten wärmeisolierten Behälter für Milch bekannt. Das Gehäuse ist mit einem Ausschnitt ausgebildet, in den der Milchbehälter einsetzbar ist.

Aus der WO 01/24671 A1 ist ein Getränkebereiter bekannt, bei dem eine Verkaufsverpackung für Milch in einer Aufnahme am Gehäuse fixiert wird während die Milch über eine Absaugleitung entnommen wird.

Weiter sind Getränkebereiter bekannt, bei denen die Milch in einer Verkaufsverpackung neben den Getränkebereiter gestellt und eine Milchleitung in die Verkaufsverpackung eingestellt wird.

Insbesondere bei Getränkebereitem, bei denen der Behälter in das Gerät eingesetzt ist, ist der Behälter während der Benutzung des Getränkebereiters für den Benutzer nicht sichtbar. Der Benutzer hat damit auch keine Möglichkeit zur visuellen Kontrolle des Behälters. Eine visuelle Kontrolle des Behälters kann jedoch zweckdienlich sein, um zum Beispiel den Füllstand des Behälters oder aber die Temperatur des Behälters zu kontrollieren. Andererseits soll der Behälter so mit dem Gerät verbunden sein, dass der Behälter nicht unbeabsichtigt entfernt oder umgestoßen werden kann.

Hier setzt die vorliegende Erfindung an.

Der vorliegenden Erfindung liegt die Aufgabe zugrunde, einen Getränkebereiter mit einem Gerät und einem Behälter für Milch so fortzubilden, dass einerseits eine visuelle Kontrolle des Behälters möglich und andererseits eine sichere Verbindung zwischen Behälter und dem Gerät gewährleistet ist.

Diese Aufgabe wird erfindungsgemäß dadurch gelöst, dass der Behälter auf der Innenseite einer Tür des Geräts herausnehmbar eingesetzt ist. Die Tür ist dazu auf ihrer Innenseite mit einem Aufnahmeteil ausgebildet, welches eine Aufnahmeöffnung für den Behälter aufweist. Das Herausnehmen und Einsetzen ist dann vorzugsweise nur möglich, wenn die Tür des Geräts geöffnet ist.

Die Tür eines erfindungsgemäßen Getränkebereiters kann eine Aufnahmeausnehmung aufweisen, in welche der Behälter einsetzbar ist.

Erfindungsgemäß kann ein Getränkebereiter so eingerichtet sein, dass der in die Tür eingesetzte Behälter oder Teile des Behälters von außerhalb des Geräts sichtbar sind. Der Getränkebereiter kann dazu eine Ausnehmung aufweisen, durch welche der Behälter oder Teile des Behälters von außerhalb des Geräts sichtbar sind.

Der Getränkebereiter kann einen in der Tür vorgesehenen Ausgabebereich haben, der zum Ausgeben des oder der Getränke vorgesehen ist. In dem Ausgabebereich können beispielsweise Ausgabedüsen für Kaffee, Kaffeegetränke, Milch und/oder Wasser vorgesehen sein. Der Ausgabebereich kann eine Nische in der Tür, insbesondere auf der Außenseite der Tür umfassen. Ein Teil des Behälters kann die Aufnahmeausnehmung, in welche der Behälter eingesetzt ist durchragen und in eine Nische des Ausgabebereichs hineinragen, so dass der in die Nische hineinragende Teil von außerhalb des Getränkebereiters sichtbar ist.

Ein erfindungsgemäßes Beispiel für einen Getränkebereiter zur Zubereitung von Getränken ist anhand der Figuren näher erläutert. Es zeigt:

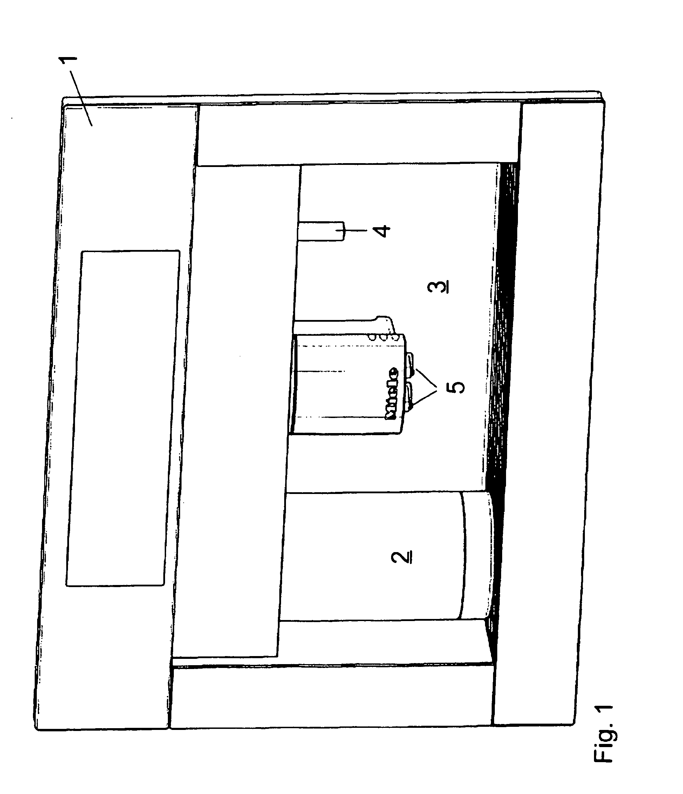

- Fig. 1: eine Frontansicht einer Tür des erfindungsgemäßen Getränkebereiters,
- Fig. 2: eine Rückansicht der Tür des erfindungsgemäßen Getränkebereiters,
- Fig. 3: eine perspektivische Darstellung eines als Milchbehälter ausgebildeten Behälters des Getränkebereiters,
- Fig. 4: eine Explosionsdarstellung des Behälters,
- Fig. 5: eine perspektivische Ansicht eines Deckels des Behälters,
- Fig. 6: eine Explosionsdarstellung des Deckels,
- Fig. 7: je einen Abschnitt von zwei Milchleitungen des Getränkebereiters,
- Fig. 8: die Enden der Milchleitungen in einer Explosionsdarstellung,
- Fig. 9: eine perspektivische Ansicht des in eine Aufnahmeausnehmung eingesetzten Behälters unter Vernachlässigung wesentlicher Teile des Deckels des Behälters,
- Fig. 10: eine Darstellung entsprechend Fig. 9 jedoch mit nicht gekuppelten Milchleitungen und Sensorstäben,
- Fig. 11: eine weitere Darstellung entsprechend Fig. 9, jedoch mit gekuppelten Milchleitungen und Sensorstäben.

Der erfindungsgemäße Getränkebereiter umfasst ein Gerät, in welchem die Getränke zubereitet werden, und das als Standgerät oder als Einbaugerät ausgestaltet sein kann. Das Gerät weist ein Gehäuse auf, in dem verschiedene Komponenten des Geräts untergebracht sind. Das Gehäuse umfasst eine Tür 1, die auf der Frontseite des Geräts vorgesehen ist, und die zu Wartungszwecken und zum Zwecke des Nachfüllens von verschiedenen Getränkezutaten geöffnet werden kann. Weitere Teile des Gehäuses oder in dem Gehäuse angeordneter Komponenten des Geräts sind in den Figuren nicht dargestellt.

Neben dem Gerät umfasst der Getränkebereiter einen als Milchbehälter ausgebildeten Behälter 2, der während des Betriebs des Getränkgebereiters in die Tür 1 des Geräts eingesetzt ist. Aus dem Behälter 2 wird, sofern ein Getränk aus Milch oder ein Getränk das Milch enthält zubereitet werden soll, Milch entnommen.

Die Getränke werden in einem Ausgabebereich 3 abgezapft, wofür der Getränkebereiter verschiedene Ausgabedüsen 4, 5 aufweist. Der Ausgabebereich 3 ist in einer Nische der Tür vorgesehen, in welche die verschiedenen Ausgabedüsen 4, 5 deckenseitig einmünden.

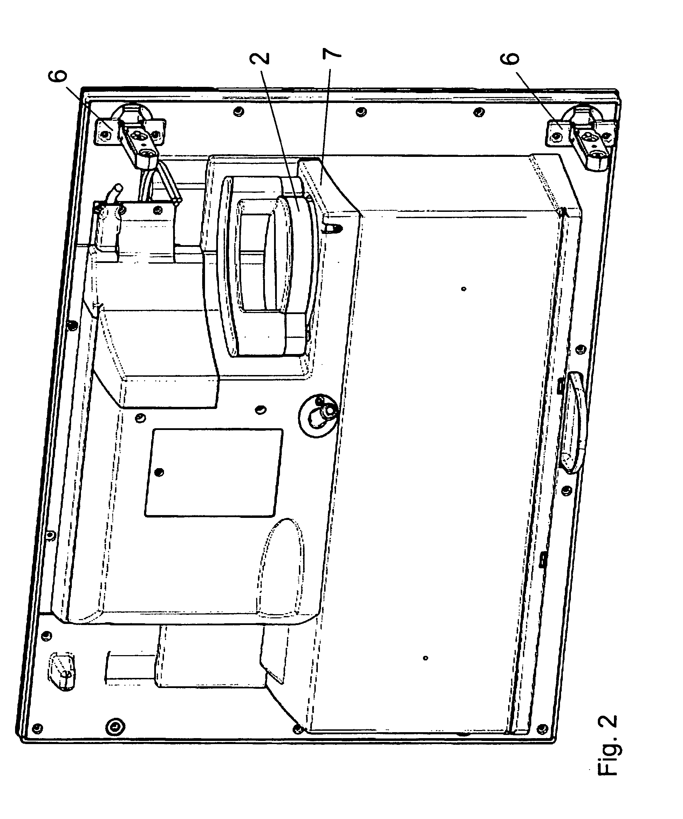

Die Tür 1 ist über Scharniere 6 mit dem übrigen Gehäuse verbunden (Fig. 2).

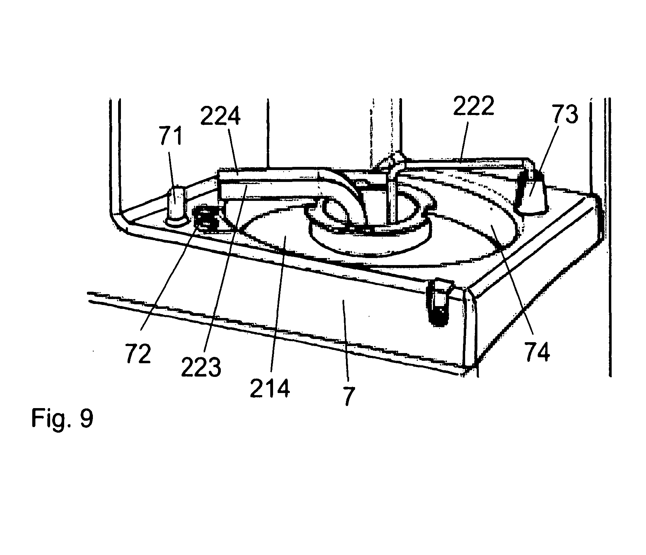

Auf der Innenseite der Tür 1 ist ein Aufnahmeteil 7 vorgesehen, in welchem eine Aufnahmeausnehmung 74 vorgesehen ist. Siehe auch Fig. 9. Diese Aufnahmeausnehmung 74 ist als Durchgangsloch ausgestaltet und mündet deckenseitig in der Nische des Ausgabebereichs 3 auf der Frontseite der Tür 1.

In die Aufnahmeausnehmung 74 ist der Behälter 2 eingesetzt. Der Behälter 2 durchgreift die Aufnahmeausnehmung 74 und ragt in die Nische des Ausgabebereichs 3 hinein. Ein Teil des Behälters 2 ist daher von außen erkennbar.

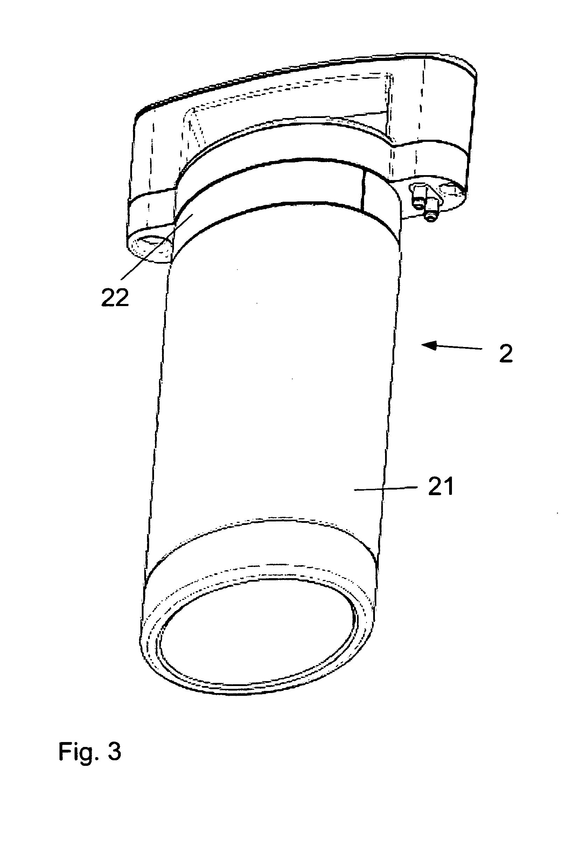

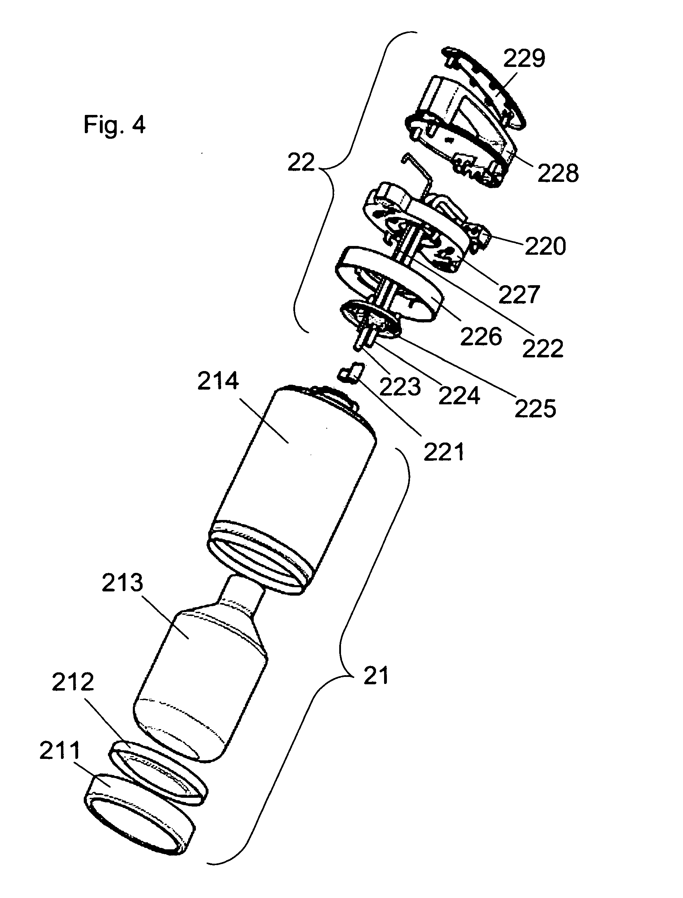

Der Behälter (Fig. 3 und 4) umfasst ein Isoliergefäß 21 und einen Deckel 22. Das Isoliergefäß 21 ist aus einem ersten Bodenteil 211, einem zweiten Bodenteil 212, einem Innengefäß 213 und einem Außengefäß 214 zusammengesetzt. Das erste Bodenteil 211 und das zweite Bodenteil 212 sind ringförmig ausgebildet. Das zweite Bodenteil 212 kann in das erste Bodenteil 211 eingesetzt werden. Das Innengefäß 213 ruht auf dem zweiten Bodentell 212, während das Außengefäß 214 auf dem Fachmann bekannte Weise mit dem ersten Bodenteil 211 verbunden ist. Das Außengehäuse 214 haust das Innengehäuse 213 ein, so dass das Innengehäuse 213 durch das Außengehäuse 214 gegen Beschädigungen geschützt ist.

Bei abgenommenem Deckel 22 kann in das Isoliergefäß 21 Milch eingefüllt werden. Nach dem Einfüllen wird dann das Isoliergefäß 21 mit dem Deckel 22 verschlossen, wozu ein Verschlussmechanismus genutzt wird, der nicht näher beschrieben wird.

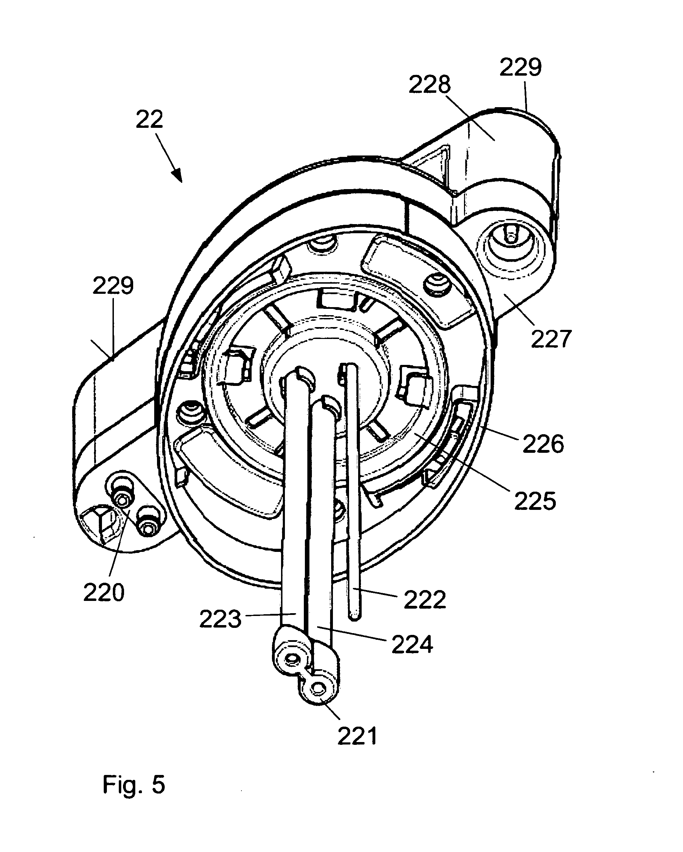

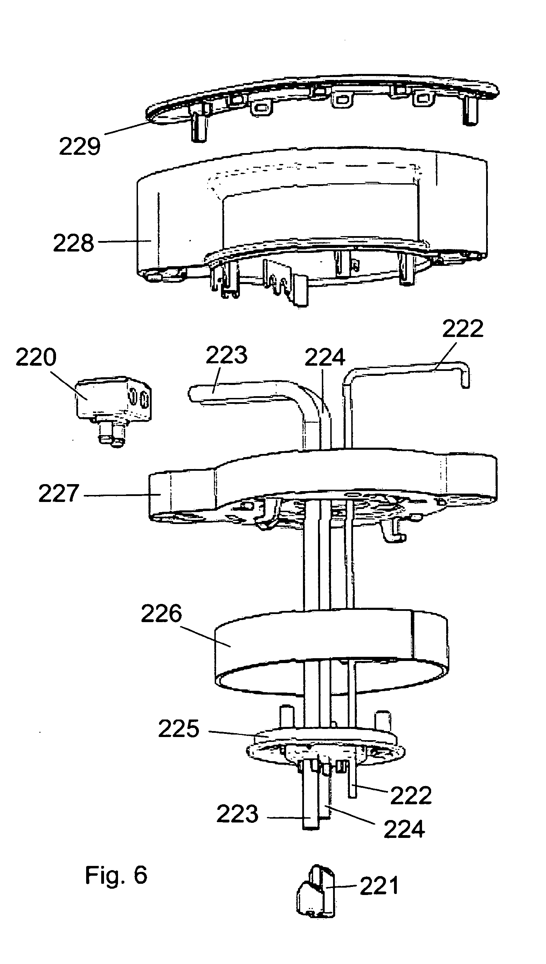

Der Deckel 22 (Fig. 4, Fig. 5 und Fig. 6) umfasst als Teile des Mechanismus zur Verbindung mit dem Isoliergefäß 21 ein erstes Verriegelungsteil 225, ein zweites Verriegelungsteil 226 und ein drittes Verriegelungsteil 227, die zum Teil gegeneinander schwenkbar auf nicht näher erläuterte Art und Weise miteinander verbunden sind. Auf dem dritten Verriegelungsteil 227 ist ein Bügelteil 228 aufgesetzt, das mit einem Abdeckungsteil 229 verbunden ist. An dem Bügelteil 228 ist ein Handgriff ausgebildet, an welchem der Behälter 2 zum Transport ergriffen werden kann.

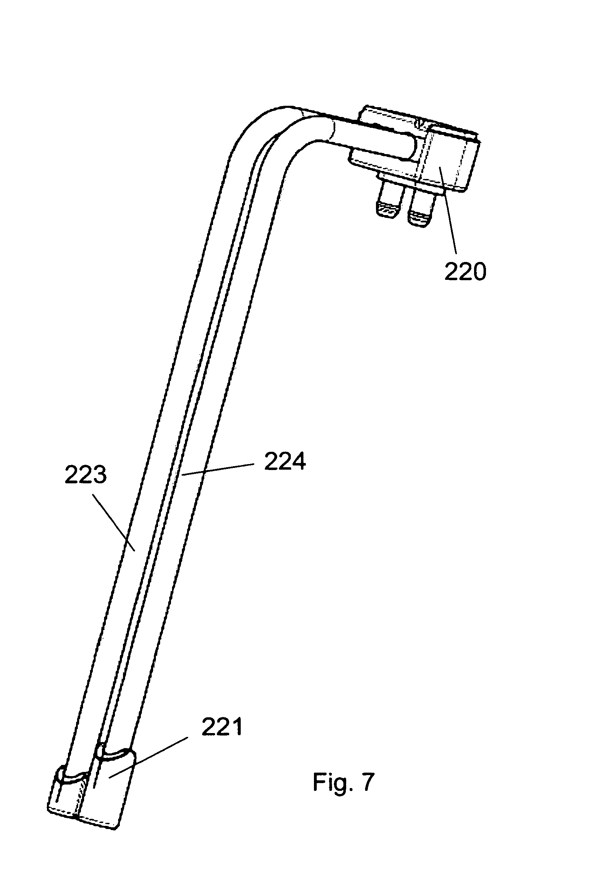

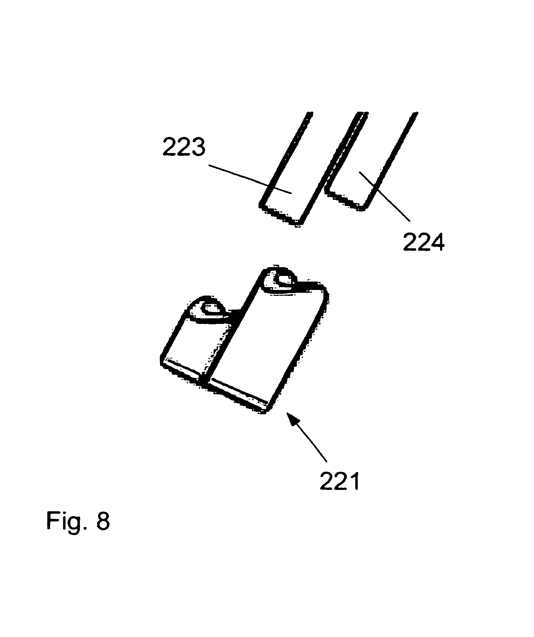

Durch das erste Verriegelungsteil 225, das zweite Verriegelungsteil 226 und das dritte Verriegelungsteil 227 ist jeweils ein Abschnitt 220, 221, 223, 224 von zwei Milchleitungen hindurchgeführt. Über die Milchleitungen kann dem Behälter 2 Milch entnommen und dem Gerät zugeführt werden. Die Abschnitte 220, 221, 223, 224 der Milchleitungen (Fig. 7, Fig. 8) weisen zwei L-förmig gebogene Rohre 223, 224, zwei Endteile 221 und ein Kupplungsmittel 220 auf. Die Endteile 221 sind miteinander fest verbunden und als ein Kunststoffspritzteil hergestellt. Die Endteile 221 sind an den Enden der längeren Schenkel der Rohre 223, 224 angebracht.

Die längeren Schenkel der Rohre 223, 224 sind ungleich lang. Der längere Schenkel des ersten Rohres 223 ist nämlich länger als der längere Schenkel des zweiten Rohres 224.

Die Endteile 221 sind komplementär zu den Enden der Rohre 223, 224 ausgebildet. Das Endteil, welches dem ersten Rohr 223 zugeordnet ist, ist kürzer als das Endteil, welches dem zweiten Rohr 224 zugeordnet ist. Damit ist sichergestellt, dass die beiden Rohre 223, 224 mit dem jeweils ihnen zugeordneten Endteil 221 verbunden sind. Dieses ist von Bedeutung, da die Ansaugöffnungen, welche in den Endteilen 221 vorgesehen sind unterschiedlich ausgebildet sind. Die Ansaugöffnung des einen Endteils hat einen größeren Querschnitt als die Ansaugöffnung des anderen Endteils. Der Querschnitt der Ansaugöffnung hat einen Einfluss auf den Volumenstrom, der über die Abschnitte 220, 221, 223, 224 der Milchleitungen gefördert werden kann. Je nach dem wie die Milch in dem Gerät verwendet werden soll, ist eine größere Milchmenge notwendig. Die Menge der aus dem Behälter 2 angesaugten Milch wird somit zum Teil auch über die Wahl des Querschnitts der Ansaugöffnung in den Endteilen 221 bestimmt.

Das Kupplungsmittel 220 dient der Verbindung der Abschnitte 220, 221, 223, 224 der Milchleitungen im Deckel 22 mit weiterführenden Abschnitten der Milchleitungen im Gerät. Von diesen weiterführenden Abschnitten ist lediglich ein zum Kupplungsmittel 220 komplementäres Kupplungsmittel 72 dargestellt (Fig. 9 bis 11).

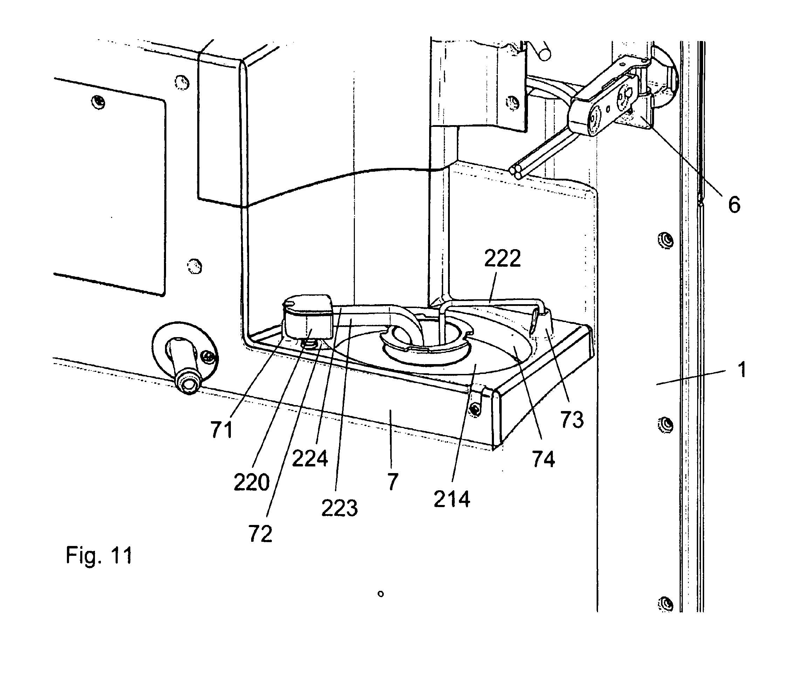

Im Deckel 22 des Behälters 2 ist ein Sensorstab 222 eines kapazitiven Füllstandssensors angeordnet (Fig. 11). Der Sensorstab 222 ist ebenfalls L-förmig gebogen, wobei der längere Schenkel parallel zu den längeren Schenkeln der Rohre 223, 224 in das Isoliergefäß 21 hineinragt. Der kürzere Schenkel liegt mit den kürzeren Schenkeln der Rohre 223, 224 in etwa in einer Ebene, läuft jedoch in eine entgegengesetzte Richtung. Das Ende des kürzeren Schenkels des Sensorstabes 222 ist rechtwinklig nach unten abgekröpft. Das abgekröpfte Ende hat die Form eines Bolzens und dieser dient der Verbindung des Sensorstabes 222 mit einer nicht dargestellten Sensorleitung im Gerät, wozu am Aufnahmeteil 7 des Geräts eine Buchse 73 zur Kupplung des Sensorstabs 222 und der Sensorleitung vorgesehen ist. Die Buchse 73 liegt auf der gegenüberliegenden Seite des geräteseitigen Kupplungsmittels 72 der Milchleitungen. Dadurch ist eine Entkopplung der elektrischen Signale, die über die Sensorleitungen beziehungsweise den Sensorstab 222 geführt werden, und der Flüssigkeit, die durch die Milchleitungen geführt wird, gewährleistet.

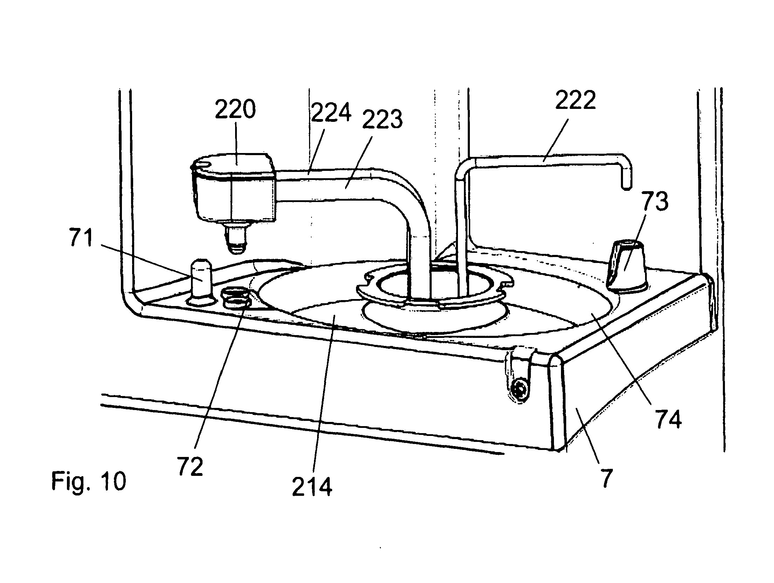

Im Bereich des geräteseitigen Kupplungsmittels 72 ist ein Positionierdom 71 vorgesehen, der in eine komplementäre Positionierbuchse im Deckel 22 eingreift. Diese Positionierbuchse ist zum Teil durch das deckelseitige Kupplungsmittel 220 gebildet (Fig. 10, Fig. 11).

Die Aufnahmeausnehmung 74 für den Behälter 2 im Aufnahmeteil 7 der Tür 1 ist so ausgerichtet, dass der Behälter 2 aufgrund seiner Schwerkraft in der Aufnahmeausnehmung 74 gehalten wird. Zugleich gewährleistet die Schwerkraft, dass die Abschnitte 220, 221, 223 und 224 der Milchleitungen im Behälter 2 und der Sensorstab 222 automatisch mit den Milchleitungen beziehungsweise Sensorleitungen im Gerät gekoppelt wird. Das Einsetzen des Behälters 2 ist aufgrund seiner ovalen Querschnittsform des Außengehäuses 214 und des dementsprechenden lichten Querschnitts der Aufnahmeausnehmung 74 und aufgrund des Positionierdoms 71 und der Buchse 73 immer nur so möglich, da ein korrektes Einsetzen des Behälters 2 in die Aufnahmeausnehmung 74 gewährleistet ist. Sofern das untere Ende des Behälters 2 in die Aufnahmeausnehmung 74 mit der richtigen Orientierung eingesetzt ist, rutschen zur Verbindung der Abschnitte der Milchleitungen Stutzen an dem Kupplungsmittel 220 automatisch in Buchsen des Kupplungsmittels 72 einerseits und zur Verbindung des Sensorstabs 222 mit der Sensorleitung der Bolzen des Sensorstabs 222 in die Buchse 73 andererseits.

Zumindest eines der Kupplungsmittel 220, 72 ist weichelastisch ausgeführt, vorzugsweise die Stutzen 220 des Behälterseitigen Kupplungsmittels 220, so dass eine dichte Verbindung der Abschnitte der Milchleitungen möglich ist, über welche die Milch aus dem Behälter 2 angesaugt werden kann.

Die Kupplungen zwischen den geräteseitigen und behälterseitigen Abschnitten der Milchleitungen 72, 220, 221, 223 und 224 und dem Sensorstab 222 und der Buchse 73 werden somit ohne weitere Handgriffe beim Einsetzen des Behälters 2 in die Aufnahmeausnehmung 74 hergestellt.

Die Erfindung ist nicht auf das vorliegende Ausführungsbeispiel begrenzt. Es können auch andere Behälter, beispielsweise zur Aufnahme von Reinigungsflüssigkeit oder dergleichen, verwendet werden.

## Patentansprüche

1. Getränkebereiter zur Zubereitung von Getränken, z. B. Kaffeeautomat, mit einem Gerät und mit einem Behälter (2), wobei das Gerät ein Gehäuse mit einer frontseitig angeordneten Tür (1) aufweist und wobei in der Tür (1) ein Ausgabebereich (3) zum Ausgeben der Getränke vorgesehen ist,
**dadurch gekennzeichnet,**
**dass** die Tür (1) auf der Innenseite ein Aufnahmeteil (7) mit einer Aufnahmeausnehmung (74) aufweist, in welche der Behälter (2) herausnehmbar einsetzbar ist.

2. Getränkebereiter zur Zubereitung von Getränken nach Anspruch 1,
**dadurch gekennzeichnet,**
**dass** die Tür (1) geeignet und eingerichtet ist, dass der Behälter (2) oder Teile des Behälters (2) von außerhalb des Geräts sichtbar ist/sind.

3. Getränkebereiter nach Anspruch 2,
**dadurch gekennzeichnet,**
**dass** der Ausgabebereich (3) eine Nische in der Tür (1) umfasst, in die die Aufnahmeausnehmung (74) mündet.

4. Getränkebereiter nach Anspruch 3,
**dadurch gekennzeichnet,**
**dass** ein Teil des Behälters (2) die Aufnahmeausnehmung (74) durchragt und in die Nische des Ausgabebereichs (3) hineinragt.

5. Getränkebereiter nach Anspruch 4,
**dadurch gekennzeichnet,**
**dass** in dem Ausgabebereich Ausgabedüsen (4, 5) für Kaffe, Kaffeegetränke, Milch und/oder Wasser vorgesehen sind.

## Claims

1. Beverage preparation means for the preparation of beverages, for example a coffee dispenser, having an appliance and a container (2), the appliance comprising a housing having a door (1) arranged on the front side thereof, and an output region (3) for the output of the beverages being provided in the door (1),
**characterised in that**
the door (1) comprises on the inner side a receiving portion (7) having a receiving recess (74), into which the container (2) can be inserted in removable manner.

2. Beverage preparation means for the preparation of beverages according to claim 1,
**characterised in that**
the door (1) is adapted and arranged so that the container (2) or portions of the container (2) is/are visible from outside the appliance.

3. Beverage preparation means according to claim 2,
**characterised in that**
the output region (3) comprises a niche in the door (1), into which niche the receiving recess (74) leads.

4. Beverage preparation means according to claim 3,
**characterised in that**
a portion of the container (2) extends through the receiving recess (74) and into the niche of the output region (3).

5. Beverage preparation means according to claim 4,
**characterised in that**
output nozzles (4, 5) for coffee, coffee beverages, milk and/or water are provided in the output region.

## Revendications

1. Préparateur de boissons pour la préparation de boissons, par exemple distributeur automatique de café, avec un appareil et avec un réservoir (2), l'appareil présentant un carter avec une porte (1) disposée sur le côté frontal, et une zone de distribution (3) étant prévue dans la porte (1) pour distribuer les boissons,
**caractérisé en ce que**
la porte (1) présente sur le côté intérieur une partie réceptrice (7) avec un évidement de réception (74) dans lequel le réservoir (2) peut être introduit de façon amovible.

2. Préparateur de boissons pour la préparation de boissons selon la revendication 1,
**caractérisé en ce que**
la porte (1) est appropriée et aménagée de sorte que le réservoir (2) ou des parties du réservoir (2) soit/soient visible(s) depuis l'extérieur de l'appareil.

3. Préparateur de boissons selon la revendication 2,
**caractérisé en ce que**
la zone de distribution (3) comprend dans la porte (1) une niche dans laquelle débouche l'évidement de réception (74).

4. Préparateur de boissons selon la revendication 3,
**caractérisé en ce**
**qu'**une partie du réservoir (2) fait saillie à travers l'évidement de réception (74) et fait saillie dans la niche de la zone de distribution (3).

5. Préparateur de boissons selon la revendication 4,
**caractérisé en ce que**,
dans la zone de distribution, il est prévu des buses de distribution (4, 5) pour du café, des boissons au café, du lait et/ou de l'eau.
